# EUROPEAN PATENT SPECIFICATION

(11) **EP 4 013 039 B1**
(45) Date of publication and mention of the grant of the patent: **04.11.2026**
(21) Application number: 20853203.6
(22) Date of filing: 05.08.2020
(51) Int. Cl.: H04N 23/80, H04N 23/84, H04N 23/951, H04N 23/69, G06N 3/006, G06N 3/045, G06N 3/08, G06T 3/4015, G06T 3/4046, G06T 3/4053, G06N 3/09, G06N 3/0464

(54) **IMAGE SENSOR, CAMERA MODULE, AND OPTICAL DEVICE COMPRISING CAMERA MODULE**
BILDSENSOR, KAMERAMODUL UND OPTISCHE VORRICHTUNG MIT KAMERAMODUL
CAPTEUR D'IMAGE, MODULE D'APPAREIL DE PRISE DE VUES ET DISPOSITIF OPTIQUE COMPRENANT UN MODULE D'APPAREIL DE PRISE DE VUES

(30) Priority: 09.08.2019 KR 20190097830
(43) Date of publication of application: 15.06.2022
(73) Proprietor: LG Innotek Co., Ltd., Seoul 07796 (KR)
(72) Inventor: KIM, Dae Hun, Seoul 07796 (KR); PARK, Jung Ah, Seoul 07796 (KR)
(74) Representative: Plasseraud IP
(86) International application number: PCT/KR2020/010361
(87) International publication number: WO 2021/029599

(56) References cited:
- EP-A1- 2 753 082
- EP-A2- 2 180 714
- JP-A- 2018 151 747
- KR-A- 20030 020 357
- KR-A- 20180 122 548
- KR-A- 20190 021 756
- KR-A- 20190 037 842
- KR-B1- 101 791 573
- US-A1- 2019 108 618
- US-A1- 2019 141 299
- ZHANG JUNKANG ET AL: "DEEP JOINT DEMOSAICING AND SUPER RESOLUTION ON HIGH RESOLUTION BAYER SENSOR DATA", 2018 IEEE GLOBAL CONFERENCE ON SIGNAL AND INFORMATION PROCESSING (GLOBALSIP), IEEE, 26 November 2018 (2018-11-26), pages 619 - 623, XP033520599, DOI: 10.1109/GLOBALSIP.2018.8646321

## Description

### [Technical Field]

The present invention relates to an image sensor, a camera module, and an optical device including a camera module, and more particularly, relates to a technology for performing line image processing using a separate processor included in the image sensor.

### [Background Art]

As technology advances and miniaturization of camera devices becomes possible, small camera devices are being applied to and used in various IT devices such as smartphones, mobile phones, PDAs, and the like. The camera devices are manufactured using an image sensor such as CCD or CMOS as a main component, and is manufactured to enable focus adjustment in order to adjust the size of an image.

Such a camera device is configured to include a plurality of lenses and an actuator, and an object with respect to the subject can be photographed in a manner in which an optical focal length is adjusted when the actuator moves each lens to change the relative distance.

Specifically, the camera device includes an image sensor that converts an optical signal received from the outside into an electrical signal, a lens that focuses light onto the image sensor, an infrared (IR) filter, a housing including them, and a printed circuit board that processes the image sensor signal, and the like, and the actuator adjusts the focal length of the lens by an actuator such as a voice coil motor (VCM) actuator or a micro electromechanical systems (MEMS) actuator.

Meanwhile, as technology advances and enables the realization of high resolution images, the demand for technologies capable of realizing high resolution images of distant objects is also increasing.

In general, cameras are equipped with a zoom function to take pictures of distant objects, and the zoom function is largely divided into an optical zoom in which the actual lens inside the camera moves to magnify the subject and a digital zoom method in which zoom effect is achieved by enlarging a portion of an image data of the photographed subject using a digital processing method.

In the case of optical zoom, which obtains an image of a subject by using lens movement, an image having a relatively high resolution can be obtained, but there is a problem in that the internal structure of the camera is complicated and the cost increases due to the addition of parts. In addition, there is a limit to an area in which a subject can be enlarged by using an optical zoom, and for this part, a technology for correcting with software is being developed.

In addition to these methods, technologies exist to implement high resolution images by generating more pixel information by moving parts inside the camera, such as a sensor shift technology that shakes the sensor with voice coil motor (VCM) or micro-electro mechanical systems (MEMS) technology, an optical image stabilizer (OIS) technology that obtains pixel information by shaking the lens with VCM and the like, and a technology that shakes the filter between the sensor and the lens, and the like.

However, the disadvantage of these technologies is that, when photographing a moving object, phenomena such as motion blur or artifacts may occur because they synthesize data of several parallaxes, which causes the problem of lowering the image quality.

On the other hand, as a high resolution implementation technology using a software algorithm generally used in TVs, there exist a single-frame super resolution (SR) or a multi-frame super resolution (SR) technology or the like.

In the case of these technologies, there is no artifact problem, but it is an algorithm that is difficult to apply to devices to which small camera modules such as mobile, vehicle, IoT, and the like can be applied, and in addition, a separate image processor is mounted in order to implement such a technology.

However, since the software for performing such a synthesis algorithm generally has a large amount of data to be processed, there was a problem that it was difficult to process in real time even in an application processor (AP), and even if the AP could perform these functions, such an AP was expensive, and there was a problem in that the manufacturing cost is increased.

US 2019141299 A1 discloses systems and methods for converting non-bayer pattern color filter array image data. EP 2753082 A1 discloses an image processing device and an image processing method. In the IEEE global conference on signal and information processing on November 26, 2018, Zhang Junkang et al. disclose a deep joint demosaicing and super resolution on high resolution bayer sensor data. US 2019108618 A1 discloses an image signal processor for processing images.

### [Detailed Description of the Invention]

### [Technical Subject]

Accordingly, the present invention is an invention devised to solve the problems of the prior art as described above, and to provide a camera module and an optical device including the same capable of performing the same function without mounting an expensive AP by performing pre-processing of at least a part of image processing processed by the AP using a separate processor mounted on the image sensor.

In addition, it is to provide a camera module and an optical device including the same capable of reducing the burden on the AP by performing pre-processing on the image to be outputted to the outside based on the information on the Bayer pattern received from the image sensor before image processing in the AP.

### [Technical Solution]

The invention is defined in the appended claims. In the present description and drawings, any examples and technical descriptions of apparatuses, products and/or methods which are not covered by the claims should be taken as background art or examples useful for understanding the invention.

### [Advantageous Effects]

An image sensor, a camera module, and an optical device including the same according to an embodiment may efficiently perform image processing without installing an expensive AP by performing a part of the image processing processed by the AP using a separate processor mounted on the image sensor, and thus, there is an effect that can relatively economically manufacture a camera module and an optical device including the same.

In addition, since the network configuration generates a high-resolution image in an optimized way, it can be implemented with a relatively small sized chip, and the present technology can be implemented by mounting the chip to which the present technology is applied in a camera device, so that the continuous zoom function can be used by applying the present technology to a camera device that does not have a zoom function or a camera device that only supports fixed zoom for a specific magnification.

In addition, since the processor performing preprocessing can perform some functions performed by an AP instead of using an algorithm that can perform image processing optimally through the deep learning process, the amount of data to be processed by the AP in real time can be reduced, and accordingly, there is an effect in that the power consumption of the AP can be lowered and the AP can be operated smoothly.

### [Brief Description of Drawings]

FIG. 1 is a block diagram illustrating a partial configuration of an image sensor according to an embodiment.
FIG. 2 is a diagram illustrating a process of performing deep learning training according to an embodiment.
FIG. 3 is a diagram illustrating an image having a third Bayer pattern that has passed through a processor according to an embodiment.
FIG. 4 is a block diagram illustrating a partial configuration of an optical device according to another embodiment.
FIG. 5 is a block diagram illustrating a partial configuration of an image sensor according to another embodiment.
FIG. 6 is a block diagram illustrating a partial configuration of an image sensor according to another embodiment.
FIG. 7 is a flowchart illustrating a method of controlling an optical device according to an embodiment.

### [BEST MODE]

The embodiments described in the present specification and the configurations illustrated in the drawings are preferred examples of the disclosed invention, and there may be various modifications that may replace the embodiments and drawings of the present specification at the time of filing of the present application.

In addition, terms used in the present specification are used to describe embodiments and are not intended to limit and/or limit the disclosed invention. Singular expressions include plural expressions unless the context clearly indicates otherwise.

In the present specification, terms such as "comprise", "include" or "have" are intended to designate the presence of features, numbers, steps, actions, components, parts, or a combination thereof described in the specification. Or the presence or addition of other features, numbers, steps, actions, components, parts, or combinations thereof, or any other feature, or a number, steps, operations, components, parts, or combinations thereof, and includes ordinal numbers such as "first" and "second" used herein. The terms described above may be used to describe various components, but the components are not limited by the terms.

Hereinafter, embodiments of the present invention will be described in detail with reference to the accompanying drawings so that those of ordinary skill in the art may easily implement the present invention. In addition, in the drawings, parts not related to the description are omitted in order to clearly describe the present invention.

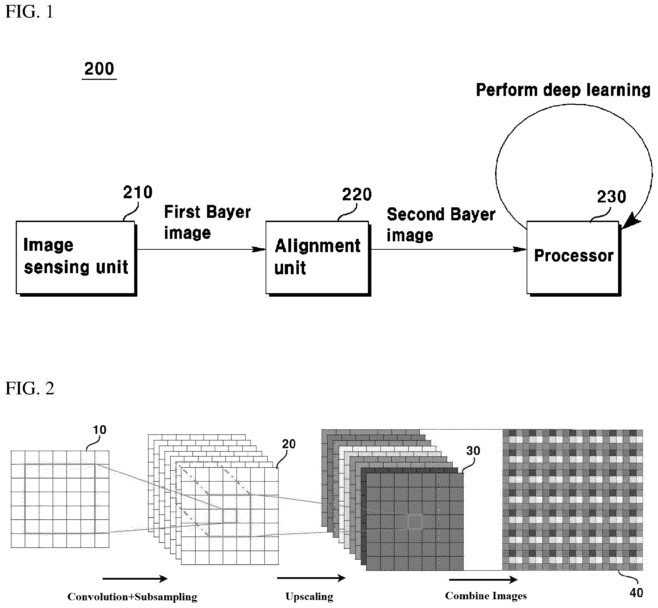

FIG. 1 is a block diagram illustrating a partial configuration of an image sensor 200 according to an embodiment.

Referring to FIG. 1, according to an embodiment, an image sensor 200 according to an embodiment may include: an image sensing unit 210 for acquiring an image of an external object; an alignment unit 220 for generating a new image by aligning or synthesizing the image acquired by the image sensing unit 210; and a processor 230 for performing deep learning based on the image received from the alignment unit 220.

The image sensing unit 210 may include a device that converts light entering through a lens **120** mounted on the camera module **100** into an electrical signal. Specifically, the sensing unit **210** may include various types of image sensors, such as a complementary metal oxide semiconductor (CMOS) or a charge coupled device (CCD).

Specifically, the image sensing unit **210** generates a first Bayer pattern having a first resolution based on information obtained through the lens **120** and transmits the generated first Bayer pattern to the alignment unit **220.**

A typical camera device or camera apparatus can output image data through a process of receiving a Bayer pattern from an image sensor and applying a color (color interpolation process, color interpolation or demosaicing), and here, the Bayer pattern means raw data being outputted by the camera module **100** or the image sensing unit **210** that converts an optical signal included in the camera module **100** into an electrical signal.

To explain this in detail, the optical signal transmitted through the lens **120** included in the camera module **100** may be converted into an electrical signal through each pixel disposed in the image sensor capable of detecting colors of R, G, and B. For example, if the specification of the camera module **100** is 5 million pixels, it can be considered that an image sensor including 5 million pixels capable of detecting colors of R, G, and B is included.

And if the number of pixels of the image sensor is 5 million, in fact, it can be seen that each pixel does not detect all colors, but monochrome pixels that detect only the brightness of black and white are combined with any one of R, G, and B filters. That is, in the image sensor, R, G, and B color filters are disposed in a specific pattern on monochromatic pixel cells arranged as many as the number of pixels.

Accordingly, the R, G, and B color patterns are disposed intersected with one another according to the user's (i.e., human) visual characteristics, and this is called a Bayer pattern.

In general, the Bayer pattern has a smaller amount of data than image data. Therefore, there is an advantage in that even if the device is equipped with a camera module that does not have a high-end processor, it can transmit and receive Bayer pattern image information relatively faster than image data, and based on this, the Bayer pattern image can be converted into images with various resolutions.

For example, since a camera module is mounted on a vehicle, the camera module does not require many processors to process images even in an environment where the low voltage differential signaling (LVDS) having a full-duplex transmission speed of 100 Mbit/s is used, and thus it is not overloaded so that it may not endanger the driver or the safety of the driver using the vehicle.

In addition, since the size of data transmitted by the in-vehicle communication network can be reduced, there is an effect in that even if it is applied to an autonomous vehicle, it is possible to eliminate problems caused by the communication method, communication speed, and the like according to the operation of a plurality of cameras disposed in the vehicle.

Returning to FIG. 1 and explaining the image sensor **200,** the alignment unit **220** may align or synthesize the images acquired by the image sensing unit **210** to generate a new image.

Specifically, the alignment unit **220** generates a second Bayer pattern by receiving the first Bayer pattern from the image sensing unit **210** and then decomposing or re-arranging all or part of the first Bayer pattern, and may transmit the generated second Bayer pattern to the processor **230.** Accordingly, the second Bayer pattern may have the same size or smaller than the first Bayer pattern.

In general, in the case of image processing, performing image processing only on the region desired by the user excluding the region not desired by the user may reduce system overload and efficiently perform image processing.

Accordingly, the alignment unit **220** may generate second Bayer pattern by decomposing or rearranging at least a part of the first Bayer pattern so that the processor **230** can perform image processing only on an area where image processing is to be performed among the first Bayer patterns received from the image sensing unit **210,** and transmit the generated second Bayer pattern to the processor **230.**

And since the alignment unit **220** does not change the resolution of the Bayer pattern, in general, the resolution of the first Bayer pattern and the second Bayer pattern can be seen as having the same resolution.

After receiving a second Bayer pattern that is at least a part of a first Bayer pattern from the image sensing unit **210,** the processor **230** may generate a third Bayer pattern having a higher resolution than the second Bayer pattern based on the received second Bayer pattern.

Specifically, the processor **230** may generate a third Bayer pattern having a third resolution value having a higher resolution than the first Bayer pattern from the second Bayer pattern having a first resolution received from the image sensing unit **210** by using an algorithm generated by deep learning training, and the value of the resolution of the third Bayer pattern can be freely set and changed by the user according to the purpose of the user.

In addition, the processor **230** performs super resolution (SR) or zooming on the received first Bayer pattern, and based on this, may generate a second Bayer pattern.

Accordingly, the image sensor **200** or the camera module **100** according to an embodiment may further include an input unit, although not illustrated in the drawing, for receiving information about the third Bayer pattern, through which the user may transmit information about a desired resolution to the image sensor **200** or the camera module **100.**

For example, if the user wants to obtain a high resolution image, the third resolution may be set to a resolution having a large difference from the first resolution, and when a new image is desired to be acquired within a relatively short time, the third resolution value may be freely set to a resolution that does not have a large difference from that of the first resolution.

In FIG. 1, the alignment unit **220** and the processor **230** are illustrated as separate components, but are not limited thereto, and the processor **230** may simultaneously perform the role of the alignment unit **220.**

In addition, the processor **230** may be implemented through a memory (not shown) in which at least one program instruction executed through the processor is stored.

Specifically, the memory may include a volatile memory such as SRAM or DRAM. However, it is not limited thereto, and in some cases, the memory may also include a non-volatile memory such as flash memory, read only memory (ROM), erasable programmable read only memory (EPROM), electronically erasable programmable read only memory (EEPROM), and the like.

Up to now, general components of the image sensor **200** according to an embodiment have been described. Hereinafter, a method and features of generating an algorithm applied to the processor **230** will be described.

The algorithm applied to the processor **230** of the image sensor **200** according to an embodiment is an algorithm for generating an image having a higher resolution than the resolution of the input image, and may mean an optimal algorithm that is generated by repeatedly performing deep learning training.

Deep learning, also referred to as deep structured learning, refers to a set of algorithms related to machine learning that attempts high-level abstraction (a task that summarizes core contents or functions in large amounts of data or complex data) through a combination of several nonlinear transformation methods.

Specifically, deep learning expresses any learning data in a form that a computer can understand (for example, in the case of an image, pixel information is expressed as a column vector, and the like), and is a learning technique for a lot of research (how to make a better representation technique and how to make a model to learn these) to apply these to learning, and may include learning techniques such as deep neural networks (DNN) and deep belief networks (DBN).

For example, deep learning may first recognize the surrounding environment and transmit the current environment state to the processor. The processor performs an action corresponding to it, and the environment informs the processor of a reward value according to the action again. And the processor takes the action that maximizes the reward value. Through this process, the learning process may be repeated.

As described above, the learning data used while performing deep learning may be a result obtained by converting a Bayer image with a low actual resolution into a Bayer image with a high resolution, or may be information obtained through simulation.

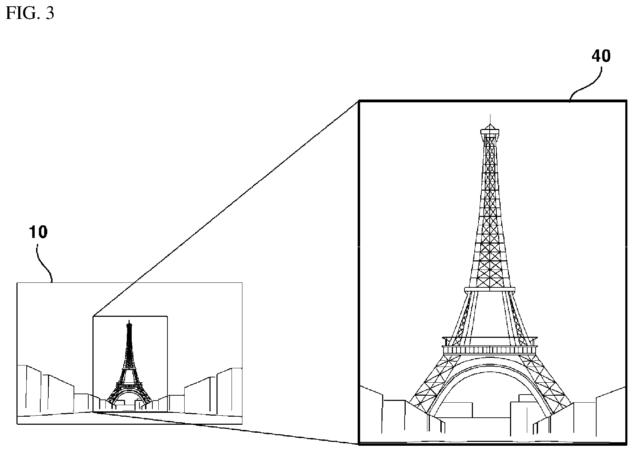

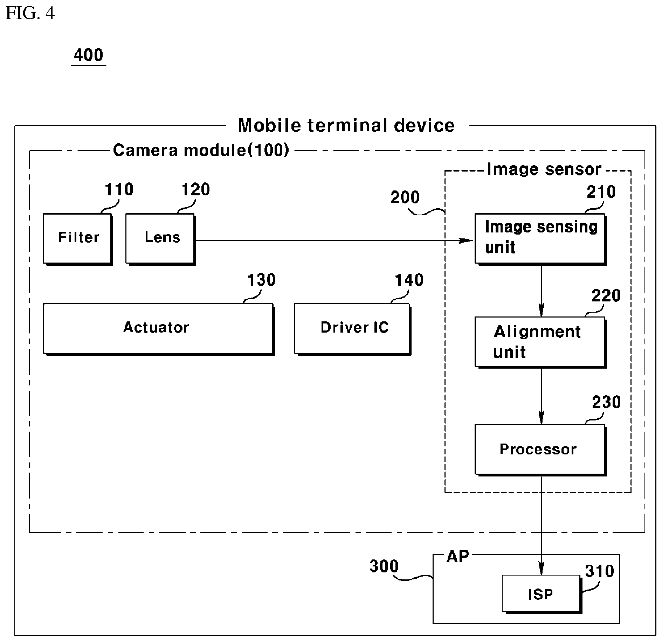

If the simulation process is performed, data can be acquired more quickly by adjusting it according to the environment of the simulation (the background of the image, the type of color, and the like). Hereinafter, a method of generating an algorithm applied to the processor **230** according to an embodiment will be described in detail with reference to FIGS. 3 and 4.

FIG. 2 is a diagram illustrating an image having a third Bayer pattern that has passed through a processor according to an embodiment, and FIG. 3 is a block diagram illustrating a partial configuration of an optical device according to another embodiment.

The deep learning of FIG. 2 is deep learning to which a deep neural network (DNN) algorithm is applied, and is a diagram illustrating a process of generating an image having a new resolution as the DNN algorithm is applied.

Deep neural networks (DNNs) can be specified as a deep neural network in which multiple hidden layers exist between an input layer and an output layer, a convolutional neural network that forms a pattern of connections between neurons, similar to the structure of the visual cortex of animals, and a recurrent neural network that builds up a neural network at every moment over time.

Specifically, DNN classifies neural networks by repeating convolution and sub-sampling to reduce the amount of data and distort. In other words, DNN outputs classification results through feature extraction and classification, and is mainly used for image analysis, and convolution means image filtering.

If describing the process being performed by the processor **230** to which the DNN algorithm is applied with reference to FIG. 2, the processor **230** performs convolution and sub-sampling on a region whose magnification is desired to be increased based on a first Bayer pattern **10** having a first resolution.

Increasing the magnification means enlarging only a specific part among the image acquired by the image sensing unit **210.** Accordingly, since the portion not selected by the user is a portion that the user is not interested in, there is no need to perform a process of increasing the resolution, so that only the portion selected by the user may be subjected to the convolution and subsampling process.

Subsampling refers to a process of reducing the size of an image. As an example, sub-sampling may use a Max-pool method and the like. Max-pool is a technique that selects the maximum value in a given region, similar to how neurons respond to the largest signal. Subsampling has advantages of reducing noise and increasing learning speed.

When convolution and subsampling are performed, a plurality of images **20** may be outputted as illustrated in FIG. 2. Thereafter, a plurality of images having different features may be outputted using an up-scale method based on the outputted images. The up-scaling method means scaling an image by r*r times using r^² different filters.

When a plurality of images are being outputted as illustrated in FIG. 2 according to the up-scale **30,** the processor **230** may recombine the images based on these images and finally output a second Bayer image **40** having a second resolution.

Accordingly, when a user selects a specific region from the image **10** having a first resolution as illustrated in FIG. 3, the processor **230** can perform the deep learning described above only for that region, and as a result of this, as illustrated in FIG. 3, a Bayer image **40** having a second resolution may be generated.

In general, in order to implement a processor capable of deep learning with a small chip, the number of deep learning processes and memory gates should be minimized, and here, the factors that have the greatest influence on the number of gates are the algorithm complexity and the amount of data processed per clock, and the amount of data processed by the processor depends on the input resolution.

Accordingly, since the processor **230** according to an embodiment creates a high-magnification image in a way that upscaling is performed after reducing the input resolution to reduce the number of gates, there is an advantage in that images can be generated faster.

For example, if an image with an input resolution of 8 MP (mega pixel) needs to be zoomed twice, it is zoomed twice by upscaling two times each in the horizontal and vertical directions based on the 1/4 area (2 MP). And after 1/4 downscaling of 1/4 area (2 MP) and using an image with a resolution of 0.5 MP as input data for deep learning, and based on the generated image, if it is zoomed 4 times (4×) in a way that the width and length are upscaled by 4 times respectively, a zoom image of the same area that is zoomed twice can be generated.

Therefore, in the processor **230** according to an embodiment, in order to prevent performance degradation due to input resolution loss, deep learning generates an image by learning as much as a magnification corresponding to the resolution loss, so there is an advantage of minimizing performance degradation.

In addition, deep learning-based algorithms for realizing high resolution images generally use a frame buffer, which may be difficult to operate in real time in general PCs and servers due to its characteristics, however, since the processor **230** according to an embodiment applies an algorithm that has already been generated through deep learning, it can be easily applied to a low-spec camera device and various devices including the same. In addition, in applying this algorithm specifically, high resolution is realized by using only a few line buffers, so there is also an effect that a processor can be implemented with a relatively small chip.

In addition, performing deep learning in the present specification may mean a process of generating an algorithm through inference or iterative learning in order to generate an optimal algorithm as described previously with reference to FIG. 2, but at the same time, executing the algorithm generated by such process can also be seen as performing deep learning.

FIG. 4 is a block diagram illustrating a partial configuration of an optical device according to another embodiment.

Referring to FIG. 4, an optical device **400** according to an embodiment may include an image sensor **200,** a camera module **100** including an image sensor; and an AP **300** including an ISP **310.**

Specifically, the camera module **100** may include a filter **110,** a lens **120,** an actuator **130,** a driver IC **140,** and an image sensor **200.**

Since the image sensor **200** and the image sensing unit **210** included in the image sensor **200,** the alignment unit **220,** and the processor **230** are components that play the same role as those described in FIG. 1, a description thereof will be omitted.

The filter **110** of the camera module **100** serves to selectively block light entering from the outside, and may be generally located at an upper portion of the lens **120.**

The lens **120** is a device that finely grinds the surface of a transparent material such as glass into a spherical surface to collect or emit light from the object to form an optical image, and a general lens **120** used in the camera module **100** may be provided with a plurality of Lenses having different characteristics.

The actuator **130** may adjust the focus by adjusting the position of the lens **120** or the barrel including the lens **120.** For example, the actuator **130** may be a voice coil motor (VCM) type. And the lens **120** may include a variable focus lens.

When the actuator **130** includes a variable focus lens, the driver IC **140** may drive the variable focus lens.

The driver IC **140** may mean a semiconductor (IC) that provides driving signals and data as electrical signals to the panel so that characters or video images are displayed on the screen, and as will be described later, the driver IC **140** may be disposed in various positions of the optical device **400.** In addition, the driver IC **140** may drive the actuator **130.**

The application processor (AP) **300** is a mobile memory chip and may mean a core semiconductor in charge of operations of various applications and graphic processing in the optical device **400.**

The AP **300** may be implemented in the form of a system on chip (SoC) that includes both the functions of a computer's central processing unit (CPU) and the functions of a chipset that controls the connection of memory, hard disk, graphic card, and other equipment.

The image signal processing unit (ISP) **310** may receive a second Bayer image generated by the processor **230** using a mobile industry processor interface (MIPI) communication and perform the process of an image signal processing.

The image signal processing unit **310** may include a plurality of sub-processes while processing the image signal. For example, Gamma correction may be performed on the received image, or at least one or more among color correction, auto exposure correction, and auto white balance may be performed.

In addition, after receiving the information again from the AP **300** which is information outputted by the image sensing unit **210** and transmitted to the AP **300,** the processor **230** according to an embodiment may generate a third Bayer pattern having a higher resolution than the second Bayer pattern based on the received image information.

Specifically, the processor **230** receives image information from the AP **300,** and then sets a range to be set to the second Bayer pattern from the first Bayer pattern based on the image information that has been received, and based on the set range, the third Bayer pattern may be generated and the generated third Bayer pattern may be transmitted to the AP **300.**

And the image information may include zoom information about the first Bayer pattern, or may include information on an area displayed by a display (not shown) that displays an image to the outside. That is, the zoom information means an area that a user wants to view with a higher resolution, and the area displayed by the display means some images displayed on the display among photographed images.

Accordingly, the processor **230** according to an embodiment does not perform image processing on a portion that does not need to perform image processing based on such information, but selectively performs image processing only on the area where image processing is to be performed, so that the efficiency can be increased.

For example, in the case when the area of interest corresponds to 1/4 of the image due to zoom in an image sensor with 8MP resolution, the operation of the processor is greatly affected when inputting an image having a size of 8MP is inputted into 8MP, compare to inputting only 2MP corresponding to the area of interest (1/4 of the entire image) due to zooming. That is, it is because image processing of a non-interested area consumes a lot of time and may overload the operation of the processor.

However, the processor **230** according to an embodiment, based on the information received from the AP 300, does not perform image processing on a portion that does not need to be processed, but selectively performs image processing only on the area where image processing must be performed, so that there is an effect that the image processing can be performed more effectively.

In addition, since the image sensor **200** according to an embodiment performs SR function through self-integration inside the sensor, it is possible to increase the use efficiency of the memory, and there is an effect of avoiding a separate redundant memory stack structure for securing real-time performance through the use of 3 stack DRAM structure of the image sensor **200.**

In general, in the case of a technology that generates more pixel information to realize a high-resolution image, there exists single-frame Super Resolution (SR) or multi-frame Super Resolution (SR) technology, or the like, but in the case of these technologies, there is no artifact problem, but it is an algorithm that is difficult to apply to devices to which small camera modules such as mobile, vehicle, IoT, and the like can be applied, and in addition, a separate image processor is mounted in order to implement such a technology.

However, since the software for performing such a synthesis algorithm generally has a large amount of data to be processed, there was a problem that it was difficult to process in real time even in an application processor (AP), and even if the AP could perform these functions, such an AP was expensive, and there was a problem in that the manufacturing cost is increased.

However, the camera module **100** or the optical device **400** according to an embodiment, as illustrated in FIG. 4, since the image sensor **200** includes a processor **230** that can perform a part of image processing processed by the AP **300,** efficient image processing is possible without installing an expensive AP, so that there is an effect of being able to manufacture a camera module and an optical device relatively economically.

In addition, since the image sensor **200** performs pre-processing on the image based on information on the Bayer pattern before image processing in the AP **300,** there is an effect of reducing the amount of data to be processed by the AP **300.** Accordingly, there is an effect of lowering power consumption of the AP **300** and operating the AP **300** more smoothly by such a structure and sequence.

That is, in the case of the prior art, in order to establish a communication connection between the image sensor, the processor, and the AP, the "image sensor output (MIPI tx) - chip input (MIPI rx) - chip output (MIPI tx) - AP input (MIPI rx)" structure was required, but since the optical device **400** according to an embodiment has a processor **230** that performs a pre-processing function inside the image sensor **200** and the information generated by the processor **230** can be outputted through the existing image sensor output **250** (MIPI tx), there is an effect of making the design relatively simple.

Accordingly, in the optical device **400** according to an exemplary embodiment, the part "chip input (MIPI rx) - chip output (MIPI tx)" can be deleted from the structure "image sensor output (MIPI tx) - chip input (MIPI rx) - chip output (MIPI tx) - AP input (MIPI rx)" of the prior art. In addition, the cost of MIPI IP can be reduced due to the integration with the image sensor **200,** so that the camera module and optical device can be economically manufactured, and the freedom of design can also be increased.

In addition, since various data information shared inside the image sensor **200** are shared together in the chip, the control signal of the AP **300** can also be unified and communicated, and memory can also be saved by using the EEPROM or Flash memory already in the image sensor **200** together.

In addition, since the image sensor **200** also includes simple ISP functions, if these functions are used for image data, a more diverse deep learning image database can be created, so that there is an effect in that the final performance can be enhanced.

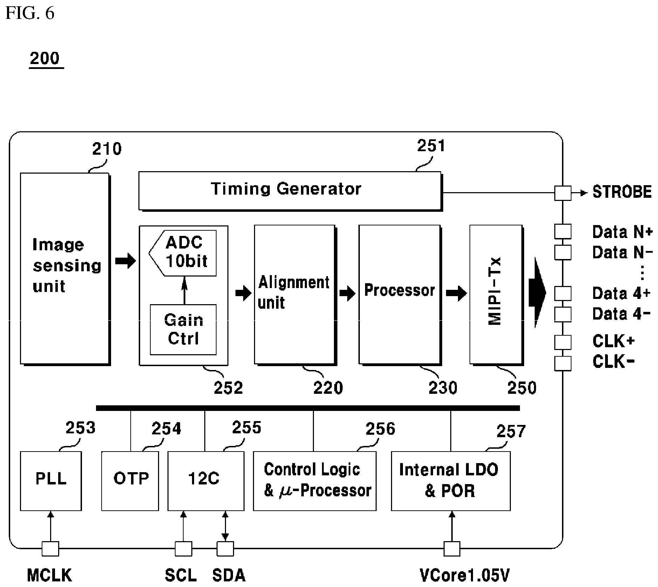

FIG. 6 is a block diagram illustrating a partial configuration of an image sensor **200** according to another embodiment.

FIG. 6 corresponds to a more detailed view of the image sensor **200** of FIG. 1 of the image sensor **200,** and a description overlapping with FIG. 1 will be omitted.

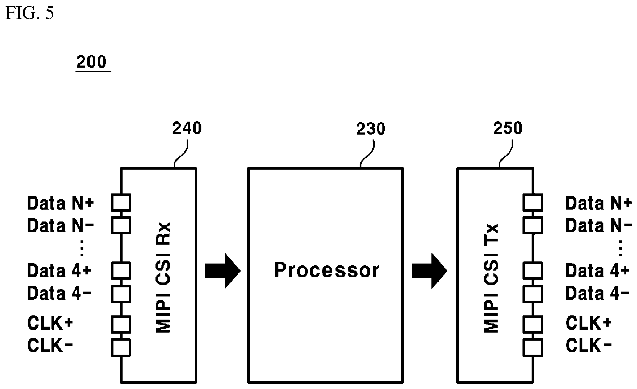

In general, in order to transmit high-capacity image raw data input from the image sensing unit **210** and processed through an internal block to the AP **300,** a highspeed MIPI interface must be used. Accordingly, the phase locked loop (PLL) **253** in FIG. 5 is a component that performs such a function, and may perform the role of frequency division and multiplication in order to achieve a speed of several Gbps.

The OTP **254** refers to a memory space for storing the image sensing unit **210** and a specific parameter of the SR algorithm.

The I2C **255** is an interface used to output an instruction according to a user's manipulation of the camera module **100** from the AP **300** and generally has a bus structure connected by two lines **SCL** and **SDA.**

In the Internal LDO (Low Drop Voltage Out) & POR **257,** the Internal LDO can serve to supply power to the image sensing unit **210,** and in the case of POR, a reset function for smooth operation in the power saving mode may be performed simultaneously with the operation instruction of the AP **300.**

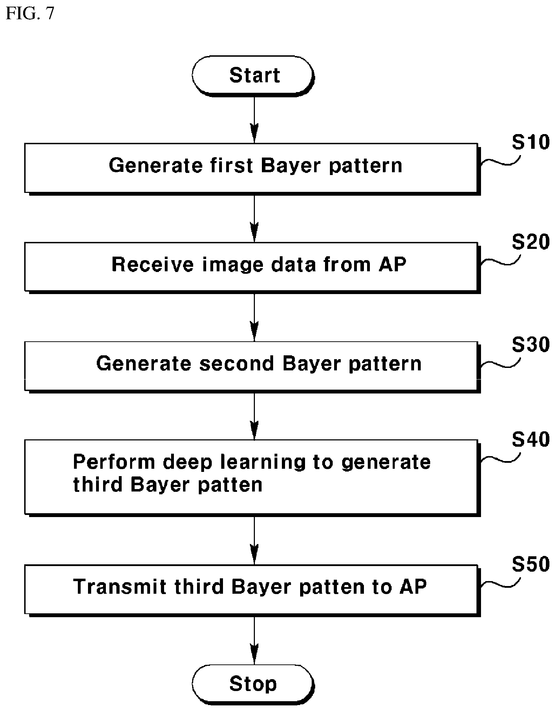

FIG. 7 is a flowchart illustrating a method of controlling an optical device **400** according to an embodiment.

Referring to FIG. 7, the optical device **400** may generate a first Bayer pattern based on information about an object received from the outside (**S10**).

Thereafter, after receiving the information on the region to be image processed from the AP, at least a partial region to be image processed among the first Bayer patterns is created as the second Bayer pattern (**S20, S30**).

Thereafter, after performing deep learning to generate a third Bayer pattern having a higher resolution than that of the second Bayer pattern, the generated third Bayer pattern may be transmitted to the AP.

Up to now, the image sensor **200,** the camera module **100,** and the optical device **400** including the camera module have been studied through the drawings.

Since the software for performing such a synthesis algorithm generally has a large amount of data to be processed, there was a problem that it was difficult to process in real time even in an application processor (AP), and even if the AP could perform these functions, such an AP was expensive, and there was a problem in that the manufacturing cost is increased.

However, the camera module **100** or the optical device **400** according to an embodiment, since the image sensor **200** includes a processor **230** that can perform a part of image processing processed by the AP **300,** efficient image processing is possible without installing an expensive AP, so that there is an effect of being able to manufacture a camera module and an optical device relatively economically.

That is, since the image sensor **200** performs pre-processing on the image based on information on the Bayer pattern before image processing in the AP **300,** there is an effect of reducing the amount of data to be processed by the AP **300.** Accordingly, there is an effect of lowering power consumption of the AP **300** and operating the AP **300** more smoothly by such a structure and sequence.

In addition, since the camera module **100** according to an embodiment generates a high-resolution image in a way that optimizes the network configuration, it can be implemented with a relatively small sized chip, and the present technology can be implemented by mounting the chip to which the present technology is applied in a camera device, so that the continuous zoom function can be used by applying the present technology to a camera device that does not have a zoom function or a camera device that only supports fixed zoom for a specific magnification.

Up to now, although the embodiments so far have been described with reference to the limited embodiments and drawings, various modifications and variations are possible from the above description by those skilled in the art.

## Claims

1. An image sensor (200) comprising:
an image sensing unit (210) for receiving light and generating a first Bayer pattern image having a first resolution;
an alignment unit (220) for receiving the first Bayer pattern image from the image sensing unit and generating a second Bayer pattern image by decomposing or rearranging at least a portion of the first Bayer pattern image; and
a processor (230) for receiving the second Bayer pattern image and image information and generating a third Bayer pattern image having a higher resolution than the second Bayer pattern image based on the second Bayer pattern image,
wherein the processor (230) outputs the third Bayer pattern image by performing image processing on the second Bayer pattern image based on an algorithm obtained by performing deep learning training to which a deep neural network (DNN) algorithm is applied,
wherein the image sensing unit (210) and the processor (230) are located inside the image sensor (200),
wherein the image sensing unit (210) outputs the first Bayer pattern image to an application processor (AP) (300) which is located outside from the image sensor (200),
wherein the application processor (300) comprises an image signal processing unit (ISP) (310),
wherein the processor (230) receives the image information from the application processor (300) and sets a range to be set to the second Bayer pattern image from the first Bayer pattern image based on the image information, to generate the third Bayer pattern image by selectively performing image processing only on the set range,
wherein the image information comprises specific range selected by user among the first Bayer pattern image,
wherein the range of the first Bayer pattern image corresponds to a partial area of the first Bayer pattern image displayed on a display.

2. The image sensor (200) according to claim 1, wherein the processor (230) performs convolution and sub-sampling on the second Bayer pattern image to output a plurality of first images (20), output a plurality of second images (30) by performing up-scaling based on the plurality of first images (20), and output a third Bayer pattern image by recombining the plurality of second images (30).

## Patentansprüche

1. Bildsensor (200), umfassend:
eine Bilderfassungseinheit (210) zum Empfangen von Licht und Erzeugen eines ersten Bayer-Muster-Bildes mit einer ersten Auflösung;
eine Ausrichtungseinheit (220) zum Empfangen des ersten Bayer-Muster-Bildes von der Bilderfassungseinheit und Erzeugen eines zweiten Bayer-Muster-Bildes durch Zerlegen oder Neuanordnen mindestens eines Teils des ersten Bayer-Muster-Bildes; und
einen Prozessor (230) zum Empfangen des zweiten Bayer-Muster-Bildes und von Bildinformationen und Erzeugen eines dritten Bayer-Muster-Bildes mit einer höheren Auflösung als das zweite Bayer-Muster-Bild basierend auf dem zweiten Bayer-Muster-Bild,
wobei der Prozessor (230) das dritte Bayer-Muster-Bild ausgibt, indem er eine Bildverarbeitung an dem zweiten Bayer-Muster-Bild basierend auf einem Algorithmus durchführt, der durch Durchführen eines Deep-Learning-Trainings erhalten wird, auf das ein Algorithmus eines tiefen neuronalen Netzwerks (DNN) angewendet wird,
wobei sich die Bilderfassungseinheit (210) und der Prozessor (230) innerhalb des Bildsensors (200) befinden,
wobei die Bilderfassungseinheit (210) das erste Bayer-Muster-Bild an einen Anwendungsprozessor (AP) (300) ausgibt, der sich außerhalb des Bildsensors (200) befindet,
wobei der Anwendungsprozessor (300) eine Bildsignalverarbeitungseinheit (ISP) (310) umfasst,
wobei der Prozessor (230) die Bildinformationen vom Anwendungsprozessor (300) empfängt und einen Bereich einstellt, der für das zweite Bayer-Muster-Bild aus dem ersten Bayer-Muster-Bild basierend auf den Bildinformationen einzustellen ist, um das dritte Bayer-Muster-Bild durch selektives Durchführen einer Bildverarbeitung nur an dem eingestellten Bereich zu erzeugen,
wobei die Bildinformationen einen vom Benutzer aus dem ersten Bayer-Muster-Bild ausgewählten spezifischen Bereich umfassen,
wobei der Bereich des ersten Bayer-Muster-Bildes einem Teilbereich des ersten Bayer-Muster-Bildes entspricht, der auf einer Anzeige angezeigt wird.

2. Bildsensor (200) nach Anspruch 1, wobei der Prozessor (230) eine Faltung und Unterabtastung an dem zweiten Bayer-Muster-Bild durchführt, um eine Vielzahl von ersten Bildern (20) auszugeben, eine Vielzahl von zweiten Bildern (30) durch Durchführen eines Hochskalierens basierend auf der Vielzahl von ersten Bildern (20) auszugeben, und ein drittes Bayer-Muster-Bild durch Rekombinieren der Vielzahl von zweiten Bildern (30) auszugeben.

## Revendications

1. Un capteur d'image (200) comprenant :
une unité de détection d'image (210) pour recevoir de la lumière et générer une première image de motif de Bayer ayant une première résolution ;
une unité d'alignement (220) pour recevoir la première image de motif de Bayer en provenance de l'unité de détection d'image et générer une deuxième image de motif de Bayer en décomposant ou en réarrangeant au moins une partie de la première image de motif de Bayer ; et
un processeur (230) pour recevoir la deuxième image de motif de Bayer et des informations d'image et générer une troisième image de motif de Bayer ayant une résolution plus élevée que la deuxième image de motif de Bayer sur la base de la deuxième image de motif de Bayer,
dans lequel le processeur (230) délivre en sortie la troisième image de motif de Bayer en effectuant un traitement d'image sur la deuxième image de motif de Bayer sur la base d'un algorithme obtenu en effectuant un entraînement par apprentissage profond auquel un algorithme de réseau neuronal profond (DNN) est appliqué,
dans lequel l'unité de détection d'image (210) et le processeur (230) sont situés à l'intérieur du capteur d'image (200),
dans lequel l'unité de détection d'image (210) délivre en sortie la première image de motif de Bayer à un processeur d'application (AP) (300) qui est situé à l'extérieur du capteur d'image (200),
dans lequel le processeur d'application (300) comprend une unité de traitement de signal d'image (ISP) (310),
dans lequel le processeur (230) reçoit les informations d'image en provenance du processeur d'application (300) et définit une plage à définir pour la deuxième image de motif de Bayer à partir de la première image de motif de Bayer sur la base des informations d'image, pour générer la troisième image de motif de Bayer en effectuant sélectivement un traitement d'image uniquement sur la plage définie,
dans lequel les informations d'image comprennent une plage spécifique sélectionnée par l'utilisateur parmi la première image de motif de Bayer,
dans lequel la plage de la première image de motif de Bayer correspond à une zone partielle de la première image de motif de Bayer affichée sur un écran.

2. Le capteur d'image (200) selon la revendication 1, dans lequel le processeur (230) effectue une convolution et un sous-échantillonnage sur la deuxième image de motif de Bayer pour délivrer en sortie une pluralité de premières images (20), délivrer en sortie une pluralité de deuxièmes images (30) en effectuant une mise à l'échelle supérieure sur la base de la pluralité de premières images (20), et délivrer en sortie une troisième image de motif de Bayer en recombinant la pluralité de deuxièmes images (30).
